# EUROPÄISCHE PATENTANMELDUNG

(11) **EP 3 567 266 A1**
(43) Veröffentlichungstag der Anmeldung: **13.11.2019**
(21) Anmeldenummer: 19173626.3
(22) Anmeldetag: 09.05.2019
(51) Int. Cl.: F16B 25/00, B62H 3/00

(54) **WAND-/BODENANKER**

(30) Priorität: 11.05.2018 DE 102018111309
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Ein Wand-/Bodenanker dient zur Sicherung von beweglichen Gegenständen, insbesondere Zweirädern, an einem Untergrund, insbesondere am Boden oder an einer Wand. Der Wand-/Bodenanker umfasst eine Ankerplatte; einen Sicherungsbügel zum Aufnehmen einer Kette oder dergleichen, wobei der Sicherungsbügel an der Ankerplatte schwenkbar gelagert ist; und mehreren Befestigungsschrauben zum dauerhaften Befestigen der Ankerplatte an dem Untergrund, wobei die Befestigungsschrauben im befestigten Zustand der Ankerplatte nebeneinander angeordnet sind. Die Befestigungsschrauben sind dazu ausgebildet, die Ankerplatte ohne die Verwendung von Dübeln an dem Untergrund zu befestigen, wobei die Befestigungsschrauben ein in Beton selbstschneidendes Gewinde aufweisen.

## Beschreibung

Die Erfindung betrifft einen Wand-/Bodenanker zur Sicherung von beweglichen Gegenständen, insbesondere Zweirädern, an einem Untergrund, insbesondere am Boden oder an einer Wand.

Derartige Wand-/Bodenanker sollen an einem Ort, an dem sich sonst keine Gelegenheit befindet, um den Gegenstand sicher vor Diebstahl zu schützen, einen Befestigungspunkt zum Festschließen des beweglichen Gegenstands bilden, beispielsweise in einer Garage, in einem Fahrradkeller, an einer Außenwand eines Gebäudes oder am Boden eines Gebäudevorplatzes.

Hierfür weisen derartige Wand-/Bodenanker eine Ankerplatte und einen an der Ankerplatte schwenkbar gelagerten Sicherungsbügel auf. Die Ankerplatte wird mittels mehrerer Befestigungsschrauben an dem Untergrund dauerhaft befestigt. Durch den Sicherungsbügel des Wand-/Bodenankers kann eine Kette oder dergleichen, beispielsweise ein Drahtseil oder der Bügel eines Vorhängeschlosses, geführt werden, um hierdurch den beweglichen Gegenstand an dem Wand-/ Bodenanker zu sichern. Beispielsweise kann ein Kettenschloss durch den Sicherungsbügel des Wand-/Bodenankers und durch den Rahmen eines Fahrrads geführt und zu einer geschlossenen Schlaufe verriegelt werden, oder es kann eine Kette durch den Sicherungsbügel des Wand-/Bodenankers geführt und mittels eines Bremsscheibenschlosses oder eines Vorhängeschlosses an einer Bremsscheibe oder einem Rahmenabschnitt eines Motorrads festgelegt werden.

Die Befestigung der Ankerplatte an dem Untergrund soll einerseits möglichst stabil sein. Hierfür können mehrere Befestigungsschrauben nebeneinander und parallel zueinander vorgesehen sein, wobei es üblich ist, Dübel in den Untergrund zu setzen, in die die Befestigungsschrauben eingeschraubt werden. Hierfür werden Aufnahmebohrungen in den Untergrund eingebracht, wobei zwischen den Bohrungen ein gewisser Abstand eingehalten werden muss. Andererseits soll die Beschädigung des Untergrunds möglichst gering gehalten werden, insbesondere für den Fall, dass der Wand-/Bodenanker zu einem späteren Zeitpunkt wieder entfernt werden soll, zumal der Benutzer des Wand-/Bodenankers nicht unbedingt der Eigentümer des betreffenden Untergrunds (Wand oder Vorplatz eines Gebäudes) ist, sondern beispielsweise ein Mieter. Der Untergrund darf durch das Einbringen der Aufnahmebohrungen auch nicht derart beschädigt werden, dass durch Riss-oder Bruchbildung seitlich zwischen den Aufnahmebohrungen das Haltevermögen des Untergrunds geschwächt wird.

Es ist Aufgabe der Erfindung, einen Wand-/Bodenanker hinsichtlich der genannten Anforderungen zu verbessern.

Diese Aufgabe wird durch einen Wand-/Bodenanker mit den Merkmalen des Anspruchs 1 gelöst, und insbesondere dadurch, dass die Befestigungsschrauben des Wand-/Bodenankers dazu ausgebildet sind, die Ankerplatte ohne die Verwendung von Dübeln an dem Untergrund zu befestigen, wobei die Befestigungsschrauben ein in Beton selbstschneidendes Gewinde aufweisen.

Der Erfindung liegt die Erkenntnis zugrunde, dass ein Wand-/Bodenanker in den meisten Fällen an einem harten Untergrund hoher Dichte und Homogenität befestigt wird, wie etwa Steinplatten (Naturstein oder Kunststein), Beton oder Mauerwerk, und dass an einem derartigen Untergrund die erforderliche Stabilität der Befestigung dadurch besonders gut erreicht werden kann, dass die Befestigungsschrauben direkt in eine jeweilige Aufnahmebohrung des Untergrunds eingeschraubt werden. Hierbei wird bewusst auf die seit langem übliche Verwendung von Dübeln verzichtet. Hierfür müssen die Befestigungsschrauben zwar ein speziell ausgebildetes Gewinde aufweisen, das nicht nur bei weichen Materialien (wie etwa Holz) selbstschneidend ist, sondern insbesondere auch bei einem Einschrauben in Beton oder Stein; derartige Befestigungsschrauben sind an sich teurer als Schrauben mit einem einfachen Schraubgewinde. Allerdings können durch den Verzicht auf Dübel die Aufnahmebohrungen im Untergrund einen geringeren Durchmesser aufweisen als eine Bohrung, in die zusätzlich ein Dübel eingesetzt werden soll. Hierdurch erfolgt bei dem Anbringen des Wand-/Bodenankers eine geringere Beschädigung des Untergrunds. Insbesondere wird auch das Risiko verringert, dass zwischen den Bohrungen für die mehreren Befestigungsschrauben, die nebeneinander und - bedingt durch die Größe der Ankerplatte - relativ nahe beieinander liegen, eine Riss- oder Bruchbildung des Untergrunds auftritt, welche das Haltevermögen des Untergrunds und somit die Stabilität der Befestigung beeinträchtigen könnte.

Gemäß einer Ausführungsform weisen die Befestigungsschrauben zumindest an ihrem vorderen Ende entlang ihres Gewindes Schneidelemente auf, insbesondere Schneiderhebungen und/oder Schneidvertiefungen. Die Schneidelemente können Erhebungen und/oder Vertiefungen relativ zu dem Gewinde, insbesondere zu den Gewindeflanken, bilden. Derartige Schneidelemente können dazu dienen, dass die Befestigungsschrauben beim Einschrauben in die jeweilige Aufnahmebohrung des Untergrunds ein Innengewinde in die Wandung der Aufnahmebohrung schneiden, in das die nachfolgenden Schraubengänge der jeweiligen Befestigungsschraube eingreifen können. Somit besitzt die jeweilige Befestigungsschraube an ihrem vorderen Ende ein Schneidgewinde, während das weitere Gewinde der Befestigungsschraube ein Schraubgewinde ist. Die Schneidelemente können sich über mehrere, z.B. zwei, drei oder vier, Schraubengänge erstrecken.

Die Schneidelemente können durch einen anderen Werkstoff als die restliche Befestigungsschraube gebildet sein, oder die Schneidelemente bestehen aus demselben Werkstoff wie die restliche Befestigungsschraube, wobei in dem letztgenannten Fall die Schneidelemente vorzugsweise gehärtet sind.

Für eine ausreichende Stabilität des selbstschneidenden Gewindes der Befestigungsschrauben ist es bevorzugt, wenn die Befestigungsschrauben zumindest entlang ihres Gewindes gehärtet sind.

Gemäß einer Ausführungsform ist der Sicherungsbügel an der Ankerplatte um eine Schwenkachse schwenkbar gelagert, wobei die Befestigungsschrauben auf unterschiedlichen Seiten der Schwenkachse angeordnet sind. Hierdurch ist auch im Falle einer hohen Zugbelastung auf den Sicherungsbügel eine gleichmäßige Kraftübertragung auf die Befestigungsschrauben gewährleistet. Die Schwenkachse kann hierbei im Wesentlichen innerhalb einer Erstreckungsebene der Ankerplatte verlaufen. Insbesondere kann der Wand-/Bodenanker zwei Befestigungsschrauben aufweisen, wobei die eine Befestigungsschraube auf der einen Seite der Schwenkachse und die andere Befestigungsschraube - gegenüberliegend hierzu - auf der anderen Seite der Schwenkachse angeordnet ist. Die beiderseits der Schwenkachse vorgesehenen Befestigungsschrauben können insbesondere in ungefähr demselben Abstand zu der Schwenkachse angeordnet sein.

Die Ankerplatte kann mehrere Durchlässe, insbesondere Senkbohrungen, aufweisen, durch welche die Ankerplatte mittels der Befestigungsschrauben an dem Untergrund befestigt werden kann.

Gemäß einer Ausführungsform können die Befestigungsschrauben an ihrem jeweiligen Schraubenkopf eine nicht-kreisrunde Vertiefung zum Ansetzen eines Schraubwerkzeugs aufweisen, wobei der Wand-/Bodenanker ferner Metallkugeln zum Einschlagen in die Vertiefungen der Schraubenköpfe aufweist, um hierdurch die Befestigungsschrauben gegen ein unbefugtes Aufschrauben zu sichern.

Gemäß einer Ausführungsform kann der Sicherungsbügel zwischen einer Ruhelage, in der der Sicherungsbügel flach an der Ankerplatte anliegt, und einer Gebrauchslage geschwenkt werden, in der der Sicherungsbügel von der Ankerplatte absteht. In der letztgenannten Stellung kann eine Kette oder dergleichen durch den Sicherungsbügel geführt werden.

Der Sicherungsbügel kann ein offener Bügel sein, der zwei freie Enden aufweist, die an Haltelaschen der Ankerplatte drehbar gelagert sind.

Alternativ hierzu kann der Sicherungsbügel eine geschlossene Öse bilden (kreisrund oder mit einer hiervon abweichenden Form), die an wenigstens einer Haltelasche der Ankerplatte schwenkbar gelagert ist.

Die Erfindung bezieht sich auch auf ein Verfahren zum Befestigen eines Wand-/ Bodenankers der vorstehend erläuterten Art an einem Untergrund, insbesondere am Boden oder an einer Wand, unter Verwendung von Befestigungsschrauben, die ein in Beton selbstschneidendes Gewinde aufweisen, bei dem:
- mehrere Aufnahmebohrungen in den Untergrund eingebracht werden, und
- die Ankerplatte mittels der mehreren Befestigungsschrauben ohne die Verwendung von Dübeln an dem Untergrund befestigt wird.

Hierbei können die Befestigungsschrauben durch Durchlässe der Ankerplatte geführt und direkt in die jeweilige Aufnahmebohrung in dem Untergrund eingeschraubt werden.

Die Erfindung wird im Folgenden beispielhaft anhand der Zeichnungen beschrieben; in diesen zeigt
- Fig. 1: eine Perspektivansicht eines erfindungsgemäßen Wand-/ Bodenankers in einer Gebrauchslage,
- Fig. 2: eine Perspektivansicht des Wand-/Bodenankers von Fig. 1 in einer Ruhelage,
- Fig. 3: eine perspektivische Explosionsansicht des Wand-/Bodenankers von Fig. 1, und
- Fig. 4: eine Perspektivansicht einer Befestigungsschraube, die ein in Beton selbstschneidendes Gewinde aufweist.

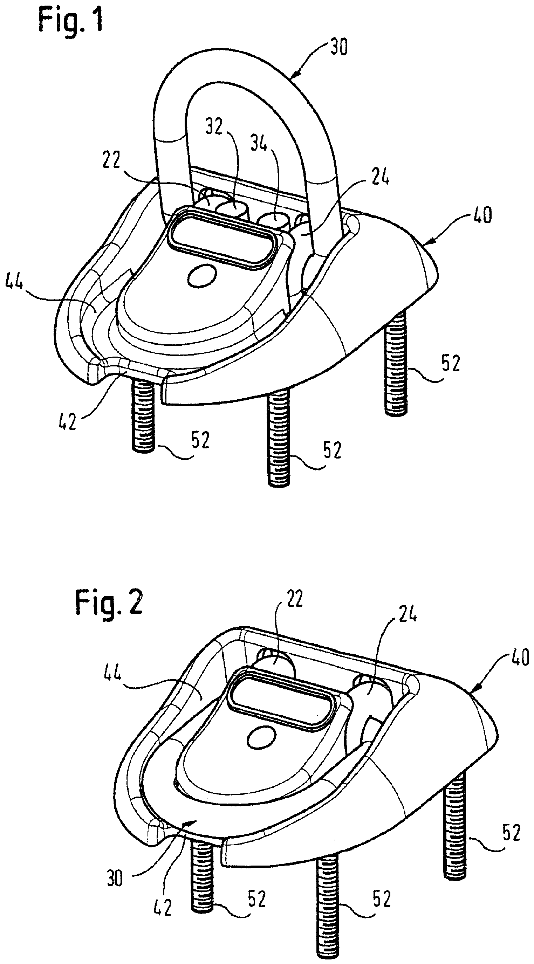

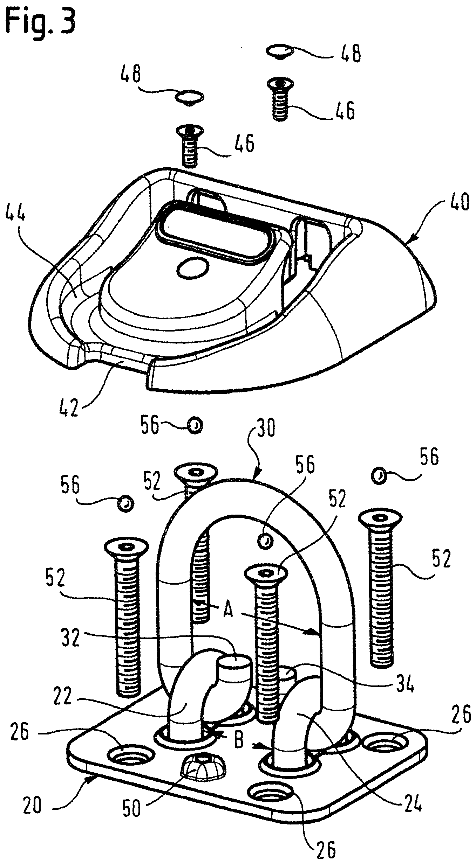

Der gezeigte Wand-/Bodenanker umfasst einen Sicherungsbügel 30 mit zwei freien Enden 32, 34, die jeweils von einer Haltelasche 22 bzw. 24 umgriffen sind, die wiederum an einer Ankerplatte 20 befestigt sind (siehe Fig. 3). Die Anordnung aus Ankerplatte 20, Haltelaschen 22, 24 und Sicherungsbügel 30 ist mit einer Abdeckkappe 40 abgedeckt. Fig. 1 zeigt den Sicherungsbügel 30 in einer hoch geschwenkten Gebrauchslage, in der er die Befestigung einer Kette, eines Stahlseils oder dergleichen ermöglicht. Fig. 2 zeigt den Anker bei herunter geschwenktem Sicherungsbügel 30. In dieser Ruhelage kommt der Sicherungsbügel 30 innerhalb einer Aussparung 44 der Abdeckkappe 40 zu liegen. In Fig. 2 ist zu erkennen, wie der Sicherungsbügel 30 im Bereich einer Griffmulde 42 zum Zwecke eines neuerlichen Hochschwenkens gegriffen werden kann.

Anhand der Explosionsansicht von Fig. 3 werden die einzelnen Bauteile des erfindungsgemäßen Wand-/Bodenankers im Detail beschrieben.

Die Ankerplatte 20 ist aus Stahl gebildet und weist einen im Wesentlichen rechteckigen Grundriss auf. An der Ankerplatte 20 sind die beiden Haltelaschen 22, 24 parallel zueinander durch Verschweißen befestigt. Ferner umfasst die Ankerplatte 20 vier Senkbohrungen 26, die als Durchlässe für Befestigungsschrauben 52 dienen. In die Ankerplatte 20 sind außerdem zwei Muttern 50 eingepresst, von denen in dieser Ansicht nur eine zu sehen ist, und über die die Abdeckkappe 40 mittels Schrauben 46 mit der Ankerplatte 20 verschraubt werden kann.

Durch jede Haltelasche 22, 24 ist jeweils ein freies Ende 32, 34 des Sicherungsbügels 30 hindurchgeführt. Diese freien Enden 32, 34 sind in einer Ebene nach innen und nach oben gebogen, so dass sie jeweils eine U-Form besitzen. Auf diese Weise ist eine schwenkbare Lagerung des Sicherungsbügels 30 in den Haltelaschen 22, 24 hergestellt. Abweichend von der Darstellung in Fig. 3 kann der Sicherungsbügel 30 auch eine geschlossene Öse bilden, beispielsweise mit einem geradlinigen Verbindungsabschnitt zwischen den zwei Stellen 32, 34 (die dann freilich keine freien Enden bilden, sondern beispielsweise L-förmige Eckabschnitte der Öse). Der Sicherungsbügel 30 und die Haltelaschen 22, 24 sind aus Rundmaterial aus Stahl mit dem gleichen Querschnittsdurchmesser hergestellt.

Die lichte Weite A des Sicherungsbügels 30 ist größer als der Abstand B der Haltelaschen 22, 24 voneinander. Das Maß A plus dem zweifachen Durchmesser des Sicherungsbügels 30 entspricht in etwa der Ausdehnung der Ankerplatte 20.

Die Anordnung aus Ankerplatte 20 und Haltelaschen 22, 24 ist mit der Abdecckappe 40 abgedeckt, die unter Zuhilfenahme der Schrauben 46 durch zwei in der Abdeckkappe 40 vorgesehene Bohrungen hindurch mit den Einpressmuttern 50 in der Ankerplatte 20 verschraubt ist. Die Kontur der Abdeckkappe 40 folgt im Wesentlichen der Kontur des Sicherungsbügels 30 im angeklappten Zustand. In der Abdeckkappe 40 sind die U-förmige Aussparung 44 zur Aufnahme des Sicherungsbügels 30 und weitere Aussparungen zur Aufnahme der Haltelaschen 22, 24 sowie eine stirnseitige Vertiefung für die Griffmulde 42 vorgesehen.

Die Montage des Wand-/Bodenankers erfolgt beispielsweise derart, dass zunächst am vorgesehenen Befestigungsort des Ankers vier Aufnahmebohrungen im Abstand der Senkbohrungen 26 der Ankerplatte in den Untergrund (z.B. Wand oder Bodenplatte aus Beton) eingebracht werden. Diese Aufnahmebohrungen im Untergrund können einen vorteilhaft geringen Durchmesser aufweisen, da die Befestigung der Ankerplatte 20 ohne die Verwendung von Dübeln erfolgt. Stattdessen wird die Ankerplatte 20 mittels der vier Befestigungsschrauben 52 unmittelbar in den Aufnahmebohrungen im Untergrund verschraubt. Anschließend werden vier Metallkugeln 56 in Innensechskantvertiefungen an den Köpfen der Befestigungsschrauben 52 eingeschlagen, so dass die Schrauben 52 nicht mehr gelöst werden können. Der Sicherungsbügel 30 wird in die Gebrauchslage geklappt, und die Abdeckkappe 40 wird über den Sicherungsbügel 30 hinweg aufgeschoben, bis ihr unterer Rand auf dem Untergrund aufliegt. Die Abdeckkappe 40 wird dann unter Zuhilfenahme der Schrauben 46 mit der Ankerplatte 20 verschraubt. Zuletzt werden die Schrauben 46 mit Schraubenkappen 48 abgedeckt.

Damit die Befestigungsschrauben 52 ohne die Verwendung von Dübeln zuverlässig und ohne die Erzeugung von übermäßigen Verspannungen in den Aufnahmebohrungen verschraubt werden können, weisen die Befestigungsschrauben 52 ein Gewinde auf, das für ein Einschrauben in Beton eine selbstschneidende Eigenschaft aufweist.

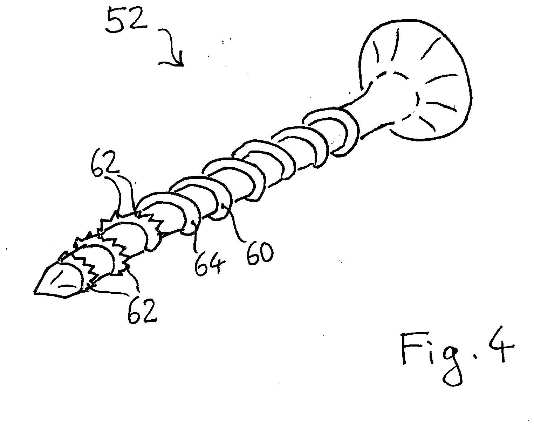

Fig. 4 zeigt eine Perspektivansicht einer solchen Befestigungsschraube 52 mit einem selbstschneidenden Gewinde 60. Die Befestigungsschraube 52 gemäß Fig. 4 besteht aus Stahl und weist an ihrem vorderen Ende entlang ihres Gewindes 60 Schneidelemente 62 in Form von Schneiderhebungen und dazwischen liegenden Schneidvertiefungen auf. Die Schneidelemente 62 sind gehärtet.

Beim Einschrauben in die jeweilige Aufnahmebohrung des Untergrunds schneiden die Schneiderhebungen der Schneidelemente 62 ein Innengewinde in die Wandung der Aufnahmebohrung des Untergrunds, in das die nachfolgenden Schraubengänge 64 der Befestigungsschraube 52 eingreifen können.

Hierdurch wird eine hohe Stabilität der Befestigung der Ankerplatte 20 am Untergrund erreicht, wobei die Aufnahmebohrungen im Untergrund einen relativ geringen Durchmesser aufweisen können. Somit wird der Untergrund durch das Anbringen des Wand-/Bodenankers nur geringfügig beschädigt, und im Vergleich zu der Verwendung von Aufnahmebohrungen größeren Durchmessers wird das Risiko verringert, dass zwischen den Aufnahmebohrungen eine Riss- oder Bruchbildung im Untergrund erfolgt.

### Bezugszeichenliste

- 20: Ankerplatte
- 22: Haltelasche
- 24: Haltelasche
- 26: Senkbohrung
- 30: Sicherungsbügel
- 32: freies Ende des Sicherungsbügels
- 34: freies Ende des Sicherungsbügels
- 40: Abdeckkappe
- 42: Griffmulde
- 44: Aussparung
- 46: Schraube
- 48: Schraubenkappe
- 50: Einpressmutter
- 52: Innensechskantschraube
- 56: Metallkugel
- 60: Gewinde
- 62: Schneidelement
- 64: Schraubengang
- A: lichte Weite des Sicherungsbügels
- B: Abstand der Haltelaschen

## Patentansprüche

1. Wand-/Bodenanker zur Sicherung von beweglichen Gegenständen, insbesondere Zweirädern, an einem Untergrund, insbesondere am Boden oder an einer Wand, mit
- einer Ankerplatte (20),
- einem Sicherungsbügel (30) zum Aufnehmen einer Kette oder dergleichen, wobei der Sicherungsbügel (30) an der Ankerplatte (20) schwenkbar gelagert ist, und
- mehreren Befestigungsschrauben (52) zum dauerhaften Befestigen der Ankerplatte (20) an dem Untergrund, wobei die Befestigungsschrauben (52) im befestigten Zustand der Ankerplatte (20) nebeneinander angeordnet sind,
**dadurch gekennzeichnet,**
**dass** die Befestigungsschrauben (52) dazu ausgebildet sind, die Ankerplatte (20) ohne die Verwendung von Dübeln an dem Untergrund zu befestigen, wobei die Befestigungsschrauben (52) ein in Beton selbstschneidendes Gewinde (60) aufweisen.

2. Wand-/Bodenanker nach Anspruch 1,
wobei die Befestigungsschrauben (52) zumindest an ihrem vorderen Ende entlang ihres Gewindes (60) Schneidelemente (62), insbesondere Schneiderhebungen und/oder Schneidvertiefungen, aufweisen.

3. Wand-/Bodenanker nach Anspruch 1 oder 2,
wobei die Befestigungsschrauben (52) zumindest entlang ihres Gewindes (60) gehärtet sind.

4. Wand-/Bodenanker nach einem der vorhergehenden Ansprüche,
wobei der Sicherungsbügel (30) an der Ankerplatte (20) um eine Schwenkachse schwenkbar gelagert ist, wobei die Befestigungsschrauben (52) auf unterschiedlichen Seiten der Schwenkachse angeordnet sind.

5. Wand-/Bodenanker nach einem der vorhergehenden Ansprüche,
wobei die Ankerplatte (20) mehrere Durchlässe, insbesondere Senkbohrungen (26), aufweist, durch welche die Ankerplatte (20) mittels der Befestigungsschrauben (52) an dem Untergrund befestigbar ist.

6. Wand-/Bodenanker nach einem der vorhergehenden Ansprüche,
wobei die Befestigungsschrauben (52) an ihrem jeweiligen Schraubenkopf eine nicht-kreisrunde Vertiefung zum Ansetzen eines Schraubwerkzeugs aufweisen, wobei der Wand-/Bodenanker ferner Metallkugeln (56) zum Einschlagen in die Vertiefungen der Schraubenköpfe aufweist, um die Befestigungsschrauben (52) gegen ein unbefugtes Aufschrauben zu sichern.

7. Wand-/Bodenanker nach einem der vorhergehenden Ansprüche,
wobei der Sicherungsbügel (30) zwischen einer Ruhelage, in der der Sicherungsbügel (30) flach an der Ankerplatte (20) anliegt, und einer Gebrauchslage schwenkbar ist, in der der Sicherungsbügel (30) von der Ankerplatte (20) absteht.

8. Wand-/Bodenanker nach einem der vorhergehenden Ansprüche,
wobei der Sicherungsbügel (30) zwei freie Enden (32, 34) aufweist, die an Haltelaschen (22, 24) der Ankerplatte (20) drehbar gelagert sind.

9. Wand-/Bodenanker nach einem der Ansprüche 1 bis 7,
wobei der Sicherungsbügel (30) eine geschlossene Öse bildet, die an wenigstens einer Haltelasche der Ankerplatte (20) schwenkbar gelagert ist.
